# DEMANDE DE BREVET EUROPEEN

(11) **EP 4 307 277 A1**
(43) Date de publication de la demande: **17.01.2024**
(21) Numéro de dépôt: 23169381.3
(22) Date de dépôt: 24.04.2023
(51) Int. Cl.: G08G 5/00, G08G 5/02

(54) **INTERFACE HOMME-MACHINE DE PILOTAGE D'UN AERONEF**

(30) Priorité: 13.07.2022 FR 2206970
(71) Demandeur: Airbus Helicopters, 13725 Marignane Cedex (FR)
(72) Inventeur: BILLET-FOISSAC, Emilie, 13880 VELAUX (FR); FAURE, Anne-Claire, 13090 AIX EN PROVENCE (FR); SIMON, Julien, 84240 PEYPIN D'AIGUES (FR)
(74) Mandataire: GPI Brevets

(57) **Abrégé**

La présente invention concerne une interface homme-machine (1) d'aide au pilotage pour surveiller un aéronef (95) se déplaçant selon une trajectoire vers ou à partir d'une aire d'atterrissage (100), ladite interface homme-machine (1) d'aide au pilotage comprenant un afficheur (10) et un générateur de symboles (20), ledit générateur de symboles (20) étant configuré pour piloter un affichage sur ledit afficheur (10) et selon une configuration d'affichage variable d'au moins une image (30, 50) comprenant plusieurs symboles d'affichage. Ledit générateur de symboles (20) est configuré à chaque instant de calcul pour paramétrer ladite configuration d'affichage en fonction d'un éloignement (D0) entre l'aéronef (95) et ladite aire d'atterrissage (100), ledit générateur de symboles (20) étant configuré pour calculer un emplacement de chaque symbole d'affichage (25) sur l'afficheur (10) en fonction de la configuration d'affichage à chaque instant de calcul.

## Description

La présente invention concerne une interface homme-machine de pilotage d'un aéronef et le procédé appliqué.

Un aéronef peut être piloté par un pilote humain embarqué ou à distance, voire par un pilote automatique, pour rejoindre une destination ou s'en éloigner. La destination peut éventuellement prendre la forme d'une aire d'atterrissage, par exemple située sur un sol, un immeuble ou encore sur un objet mobile.

En particulier, un drone peut être piloté par un pilote automatique ou humain non embarqué pour apponter sur un navire, une plateforme ou un vertiport.

Dans ce contexte, une interface homme-machine peut comprendre un ou plusieurs afficheurs affichant une représentation du déplacement de l'aéronef. Une telle interface homme-machine peut être intéressante pour optimiser la charge de travail d'un opérateur.

Selon un exemple, un pilote humain non embarqué d'un drone peut avoir besoin de visualiser le déplacement du drone afin de le diriger vers sa destination en suivant une trajectoire particulière, voire pour interrompre la mission en cours.

Selon un autre exemple et dans le cadre d'un aéronef piloté par un pilote automatique, la visualisation sur un afficheur de la trajectoire suivie par l'aéronef permet à un opérateur embarqué ou non embarqué de vérifier que l'aéronef se comporte de la manière attendue. A titre illustratif, un drone peut se diriger automatiquement vers une aire d'atterrissage présente sur un bateau en suivant une trajectoire particulière. Un opérateur présent sur le bateau peut suivre sur un afficheur le déplacement du drone afin de vérifier que le drone se comporte normalement. Le cas échéant, l'opérateur peut interrompre le trajet du drone vers le bateau et/ou peut piloter à distance le drone à l'aide de commandes déportées.

Le document WO2010/077531 propose un système déterminant des points de passage d'une trajectoire menant un aéronef vers une installation dite « offshore » en langue anglaise. Le système est configuré pour afficher les points de passage sur un afficheur. A partir d'une certaine distance de l'installation offshore, le système adapte une échelle de l'afficheur en fonction de la distance séparant l'aéronef de l'installation offshore afin de maintenir une zone de sécurité balayée par un RADAR dans la partie supérieure de l'afficheur.

Les documents suivants sont éloignés de cette problématique.

Le document FR3062493 décrit un procédé et un système d'aide à l'approche et à la mise en vol stationnaire relatif d'un giravion vis-à-vis d'une aire mobile. Une trajectoire à suivre est déterminée et affichée sur un écran. La trajectoire passe par divers points de passage.

Le document EP2009534 divulgue un système et une méthode pour fournir des informations d'approche à un premier véhicule qui s'approche d'un second véhicule, tel un porte-avions. Le système détermine notamment une information de mouvement du second véhicule et au moins une trajectoire segmentée basée sur au moins un centre de mouvement du second véhicule ou d'une zone d'atterrissage du second véhicule.

Le document US10739789 vise un système pour diriger un aéronef vers un point d'approche situé à une distance prédéterminée d'un navire en mouvement.

Le document WO2011/008643 décrit un système affichant une représentation du trafic aérien à proximité d'un aéronef dans une vue « horizontale » et dans une vue « verticale ». La vue horizontale présente le trafic aérien vu selon un axe vertical dans le référentiel terrestre, alors que la vue verticale présente le trafic aérien vu selon un axe horizontal perpendiculaire à l'axe vertical.

Les documents EP 3 293 718 A2, US 2011/264312 A1, et US 2015/002316 A1 sont aussi connus et poursuivent des buts éloignés de l'invention.

La présente invention a alors pour objet de proposer une interface homme-machine et un procédé visant à produire un affichage d'une trajectoire à suivre par un aéronef facilitant la charge de travail d'un opérateur surveillant l'aéronef, un pilote par exemple.

La présente invention vise ainsi une interface homme-machine d'aide au pilotage pour surveiller un aéronef se déplaçant selon une trajectoire vers ou à partir d'une aire d'atterrissage, ladite interface homme-machine d'aide au pilotage comprenant un afficheur et un générateur de symboles, ledit générateur de symboles étant configuré pour piloter un affichage sur ledit afficheur et selon une configuration d'affichage variable d'au moins une image comprenant plusieurs symboles d'affichage, lesdits plusieurs symboles d'affichage comprenant un symbole d'aéronef illustrant ledit aéronef, un symbole d'aire d'atterrissage illustrant ladite aire d'atterrissage et au moins un symbole de passage illustrant un point de passage de la trajectoire.

Le générateur de symboles est configuré à chaque instant de calcul pour paramétrer ladite configuration d'affichage en fonction d'un éloignement entre l'aéronef et ladite aire d'atterrissage, ledit générateur de symboles étant configuré pour calculer un emplacement de chaque symbole d'affichage sur l'afficheur en fonction de la configuration d'affichage à chaque instant de calcul, ladite configuration d'affichage comprenant au moins une des variables paramétrables suivantes : une orientation de ladite image par rapport à l'afficheur, un positionnement d'un ancrage de l'image par rapport à l'afficheur et un référentiel à utiliser pour calculer ledit emplacement de chaque symbole d'affichage.

L'aire d'atterrissage peut être une aire d'atterrissage immobile, au sol ou sur un immeuble par exemple. L'aire d'atterrissage peut être une aire d'atterrissage mobile dans le référentiel terrestre, par exemple présente sur un véhicule en mouvement tel un bateau sur l'eau.

L'expression « point de passage » désigne un point par lequel l'aéronef doit passer. Un point de passage peut correspondre à un point où l'aéronef doit modifier une consigne d'altitude ou de hauteur, une consigne de vitesse, et/ou une consigne de cap à suivre par exemple.

Le terme « éloignement » représente une distance représentative de l'espace séparant l'aéronef de l'aire d'atterrissage. Le terme éloignement peut représenter la plus petite distance, soit en ligne droite, entre l'aéronef et l'aire d'atterrissage ou encore par exemple la distance séparant des projections de l'aéronef et de l'aire d'atterrissage dans un plan horizontal selon le référentiel terrestre.

Par ailleurs, la trajectoire peut être déterminée par l'aéronef ou l'interface homme-machine, éventuellement à partir d'un paramétrage initial réalisé avec l'interface homme-machine. Selon un exemple, un opérateur paramètre un sens de vent au niveau de l'aire d'atterrissage avec l'interface homme-machine, l'aéronef ou l'interface homme-machine calculant la trajectoire à suivre en fonction de ce sens du vent. Par exemple, lors d'une phase d'atterrissage, la trajectoire peut être établie pour permettre un atterrissage face au vent.

Dès lors, l'interface homme-machine détermine et affiche au moins une image permettant de suivre les évolutions d'un aéronef par rapport à une aire d'atterrissage. Ainsi, un opérateur peut utiliser, par exemple, cette interface homme-machine sur le pont d'un bateau comprenant l'aire d'atterrissage lorsqu'un aéronef décolle à partir de cette aire d'atterrissage ou cherche à atterrir sur cette aire d'atterrissage.

L'interface homme-machine peut ainsi adapter en particulier le référentiel utilisé pour calculer l'emplacement des divers symboles affichés en fonction de la précision requise. L'interface homme-machine peut adapter l'orientation de l'image pour permettre à l'opérateur de bien appréhender les déplacements de l'aéronef. L'interface homme-machine peut adapter l'ancrage de l'image, à savoir peut définir un point de l'image par rapport auquel les autres points sont mobiles, là aussi pour permettre à l'opérateur de bien appréhender les déplacements de l'aéronef.

L'interface homme-machine est alors configurée pour adapter la ou les images affichées automatiquement en fonction de l'éloignement entre l'aéronef et l'aire d'atterrissage afin de faciliter la tâche de l'opérateur. En particulier, l'interface homme-machine adapte la configuration d'affichage pour présenter les informations requises de la manière la plus appropriée en fonction de la position de l'aéronef par rapport à l'aire d'atterrissage.

Ainsi, lorsque l'aéronef se trouve à une première distance de l'aire d'atterrissage, le générateur de symboles est configuré pour afficher les symboles selon une première configuration. A une deuxième distance, par exemple plus près de l'aire d'atterrissage, le générateur de symboles est configuré pour afficher automatiquement les symboles selon une deuxième configuration différente de la première configuration. L'orientation, l'ancrage et/ou le référentiel de l'image affichée sont automatiquement changés par le générateur de symboles, entre la première configuration et la deuxième configuration, pour présenter les informations requises de la manière la plus appropriée à chaque instant. Le changement de configuration est automatiquement réalisé en fonction de l'éloignement entre l'aéronef et l'aire d'atterrissage.

L'interface homme-machine peut de plus comprendre une ou plusieurs des caractéristiques qui suivent.

Selon une possibilité, ledit générateur de symboles peut être configuré pour paramétrer ledit référentiel en choisissant ce référentiel parmi une liste comprenant au minimum un référentiel absolu dans lequel chaque symbole d'affichage est associé à une latitude ainsi qu'à une longitude et à une altitude, un référentiel relatif centré sur l'aire d'atterrissage, un référentiel d'aire moyenne centré sur une position moyenne depuis un temps prédéterminé d'une aire d'atterrissage mobile.

Par exemple, lorsque l'aéronef est éloigné de l'aire d'atterrissage, l'interface homme-machine utilise le référentiel absolu et les senseurs associés pour positionner les différents symboles d'affichage puisqu'à une telle distance il n'est pas nécessaire d'avoir une précision de calcul importante. A l'inverse, lorsque l'aéronef se rapproche de l'aire d'atterrissage, l'interface homme-machine utilise le référentiel relatif et le ou les senseurs associés pour positionner les différents symboles d'affichage afin de fournir des informations précises à l'opérateur. En présence d'une aire mobile dans le référentiel terrestre, à très courte distance, un référentiel d'aire moyenne peut être utilisé pour prendre en compte les mouvements de l'aire d'atterrissage.

Selon une possibilité compatible avec la précédente, l'interface homme-machine peut afficher une ou plusieurs images pour illustrer le positionnement des différents symboles d'affichage dans l'espace.

En particulier, ladite au moins une image peut comprendre une image horizontale contenant au moins un symbole d'affichage vu verticalement selon un référentiel terrestre.

Une telle image permet de visualiser la situation vue de dessus par exemple, et donc de visualiser l'éloignement entre les différents points d'affichage.

Dès lors, ladite configuration d'affichage peut comprendre au moins les trois dites variables paramétrables, à savoir l'orientation, le référentiel et l'ancrage précités.

Selon une possibilité compatible avec les précédentes, ledit générateur de symboles peut être configuré pour paramétrer ladite orientation de l'image horizontale en choisissant cette orientation parmi une liste comprenant une orientation par rapport au nord pour qu'un point de l'image horizontale illustrant le nord magnétique ou géographique soit positionné dans un endroit prédéterminé de l'afficheur, une orientation par rapport au cap pour qu'un cap de l'aéronef soit positionné d'une manière prédéterminée sur l'afficheur, une orientation par rapport à l'aire d'atterrissage pour que le symbole d'aire d'atterrissage soit positionné d'une manière prédéterminée sur l'afficheur.

Par exemple, lorsque l'aéronef est éloigné de l'aire d'atterrissage, l'interface homme-machine utilise orientation par rapport au nord pour fournir une vue globale de la situation. A l'inverse, lorsque l'aéronef se rapproche de l'aire d'atterrissage, l'interface homme-machine utilise l'orientation par rapport au cap afin de visualiser le déplacement de l'aéronef « vu de l'aéronef ». Enfin, à proximité de l'aire d'atterrissage, l'orientation par rapport à l'aire d'atterrissage peut être utilisée pour fournir à l'opérateur une image sensiblement conforme à la scène qu'il observe depuis l'aire d'atterrissage.

Selon une possibilité compatible avec les précédentes, ledit générateur de symboles peut être configuré pour paramétrer ledit positionnement d'un ancrage de l'image horizontale en choisissant ce positionnement parmi une liste comprenant un positionnement global permettant d'afficher chaque symbole d'affichage sur l'afficheur, un positionnement par rapport à l'aéronef en positionnant le symbole d'aéronef d'une manière prédéterminée et fixe sur l'afficheur, un positionnement par rapport à l'aire d'atterrissage en positionnant le symbole d'aire d'atterrissage d'une manière prédéterminée et fixe sur l'afficheur.

Par exemple, lorsque l'aéronef est éloigné de l'aire d'atterrissage, l'interface homme-machine immobilise un point central de l'image, par exemple le barycentre des symboles d'affichage, pour fournir une vue globale de tous les symboles d'affichage. A l'inverse, lorsque l'aéronef se rapproche de l'aire d'atterrissage, l'interface homme-machine fige la position de l'aéronef sur l'afficheur pour visualiser le déplacement de l'aéronef « vu de l'aéronef ». Enfin, à proximité de l'aire d'atterrissage, l'interface homme-machine fige la position de l'aire d'atterrissage pour fournir à l'opérateur une image sensiblement conforme à la scène qu'il observe.

Eventuellement, ledit symbole d'aire d'atterrissage pouvant comprendre une représentation d'une poupe d'un bateau, ledit positionnement par rapport à l'aire d'atterrissage peut comporter un positionnement de ladite représentation de ladite poupe sur ledit afficheur à un emplacement prédéterminé.

Cette caractéristique permet à un opérateur présent sur le bateau d'avoir une image illustrant ce que cet opérateur voit.

Selon une possibilité compatible avec les précédentes et en présence d'une image horizontale, ladite configuration d'affichage peut comporter une variable de représentation, le générateur de symboles étant configuré pour paramétrer ladite variable de représentation soit dans un premier mode selon lequel le générateur de symboles est configuré pour afficher des cercles concentriques porteurs de distances respectives centrés sur un centre fixe sur l'afficheur, soit dans un deuxième mode selon lequel le générateur de symboles est configuré pour afficher des arcs de cercle centrés sur un centre fixe sur l'afficheur.

En fonction de l'éloignement, le symbole d'aéronef, le symbole d'aire d'atterrissage ou le barycentre des symboles de passage peut être positionné sur ledit centre.

Des cercles ou des arcs de cercle porteurs de distances peuvent être affichés pour aider l'opérateur à évaluer la situation.

Ainsi, la configuration d'affichage de l'image horizontale peut varier en fonction de l'éloignement et au regard de seuils mémorisés. Ces seuils peuvent correspondre à des distances mémorisées et/ou à des distances associées à des points de passage par exemple.

Selon une possibilité compatible avec les précédentes et en présence d'une image horizontale, ledit générateur de symboles peut être configuré pour déterminer si ledit éloignement est supérieur à un seuil maximal et dans ce cas pour paramétrer automatiquement ladite orientation de l'image horizontale selon une orientation par rapport au nord pour qu'un point de l'image horizontale illustrant le nord magnétique ou géographique soit positionné dans un endroit prédéterminé de l'afficheur, pour paramétrer ledit référentiel selon un référentiel absolu dans lequel chaque symbole d'affichage est associé à une latitude ainsi qu'à une longitude et à une altitude, et pour paramétrer ledit positionnement selon un positionnement global permettant d'afficher chaque symbole d'affichage.

Par exemple, le seuil maximal est de l'ordre de 10 milles nautiques, soit 18.52 kilomètres.

A grande distance de l'aire d'atterrissage, la configuration d'affichage permet de présenter les différents points d'affichage à un opérateur de manière globale, avec une précision acceptable. L'opérateur peut vérifier la forme générale de la trajectoire suivie, par exemple pour vérifier que l'aéronef se présente du bon côté de l'aire d'atterrissage durant une phase d'atterrissage.

Le cas échéant, ledit générateur de symboles peut être configuré pour paramétrer une variable de représentation de la configuration d'affichage dans un premier mode selon lequel le générateur de symboles est configuré pour afficher des cercles concentriques porteurs de distances autour d'un centre positionné au niveau d'un barycentre des symboles d'affichage. L'opérateur peut éventuellement changer ce paramétrage manuellement.

Selon une possibilité compatible avec les précédentes et en présence d'une image horizontale, ledit générateur de symboles peut être configuré pour déterminer si ledit éloignement est inférieur ou égal à un seuil maximal et supérieur à un seuil minimal, et dans ce cas pour paramétrer ladite orientation de l'image horizontale selon une orientation par rapport au cap pour qu'un cap de l'aéronef soit positionné d'une manière prédéterminée sur l'afficheur, pour paramétrer ledit référentiel selon un référentiel absolu dans lequel chaque symbole d'affichage est associé à une latitude ainsi qu'à une longitude et à une altitude, et pour paramétrer par défaut ledit positionnement selon un positionnement par rapport à l'aéronef.

Par exemple, le seuil minimal est de l'ordre de 1 mille nautique soit 1,852 kilomètres.

A moyenne distance de l'aire d'atterrissage, l'image horizontale est alors ancrée sur l'aéronef pour surveiller le déplacement de l'aéronef dans un référentiel absolu. L'opérateur surveille le déplacement de l'aéronef « vu de l'aéronef ». La variable de représentation éventuelle de la configuration d'affichage peut être indifféremment paramétrée par défaut selon le premier mode ou le deuxième mode, voire peut être modifiée par l'opérateur à l'aide d'une interface.

Selon une possibilité compatible avec les précédentes et en présence d'une image horizontale, ledit générateur de symboles peut être configuré pour déterminer si ledit éloignement est inférieur ou égal à un seuil minimal et supérieur à un seuil de proximité, et dans ce cas pour paramétrer ladite orientation selon une orientation par rapport à l'aire d'atterrissage pour que le symbole d'aire d'atterrissage soit positionnée d'une manière prédéterminée sur l'afficheur, pour paramétrer ledit référentiel selon un référentiel relatif centré sur l'aire d'atterrissage, pour paramétrer ledit positionnement selon un positionnement par rapport à l'aire d'atterrissage en positionnant un symbole d'aire d'atterrissage illustrant ladite aire d'atterrissage d'une manière prédéterminée et fixe sur l'afficheur.

Par exemple, le seuil de proximité est de l'ordre de 150 yards soit environ 137 mètres. Le seuil de proximité peut être positionné sur un point de passage au niveau duquel un atterrissage peut être interrompu si besoin.

A courte distance de l'aire d'atterrissage, l'image horizontale est ancrée sur l'aire d'atterrissage et est déterminée en utilisant un référentiel relatif précis. L'opérateur surveille le déplacement de l'aéronef « vu de l'aire d'atterrissage ». La variable de représentation éventuelle de la configuration d'affichage peut être indifféremment paramétrée par défaut selon le premier mode ou le deuxième mode, voire peut être modifiée par l'opérateur avec une interface.

Selon une possibilité compatible avec les précédentes et en présence d'une image horizontale, ledit générateur de symboles peut être configuré pour déterminer si ledit éloignement est inférieur ou égal à un seuil de proximité et dans ce cas pour paramétrer automatiquement ladite orientation de l'image horizontale selon une orientation par rapport à l'aire d'atterrissage pour que le symbole d'aire d'atterrissage soit positionnée d'une manière prédéterminée sur l'afficheur, pour paramétrer ledit référentiel selon un référentiel relatif centré sur l'aire d'atterrissage, et pour paramétrer ledit positionnement selon un positionnement par rapport à l'aire d'atterrissage en positionnant le symbole d'aire d'atterrissage d'une manière prédéterminée et fixe sur l'afficheur.

A très courte distance, le symbole d'aire d'atterrissage peut être plus détaillé qu'à courte distance. Par exemple, à courte distance le symbole d'aire d'atterrissage peut représenter un bateau, alors qu'à très courte distance le symbole d'aéronef peut représenter l'aire d'atterrissage en tant que telle.

Selon une possibilité compatible avec les précédentes, ladite au moins une image comprend une image verticale présentant au moins le symbole d'aéronef et le symbole d'aire d'atterrissage à des altitudes respectives.

Eventuellement, ladite image verticale peut comporter une échelle d'altitude ayant au moins une limite variable en fonction dudit éloignement.

Selon une possibilité compatible avec les précédentes et en présence d'une image verticale, au moins tant que ledit éloignement est supérieur à un seuil de proximité, ledit générateur de symboles peut être configuré pour positionner chaque symbole d'affichage de l'image verticale en fonction de son espacement avec une origine et de son altitude, ladite configuration d'affichage comprenant au moins en tant que variables ladite origine ainsi qu'un positionnement de ladite origine sur l'afficheur et ledit référentiel, ledit générateur de symboles étant configuré pour paramétrer ladite origine en la choisissant dans une liste comprenant l'aéronef et l'aire d'atterrissage, ledit générateur de symboles étant configuré pour paramétrer ledit positionnement afin de positionner ladite origine dans une première position ou une deuxième position sur l'afficheur en fonction dudit éloignement.

L'image verticale peut représenter un diagramme comprenant un axe d'ordonnées porteur d'altitudes. Les graduations de cet axe d'ordonnées peuvent varier en fonction de l'éloignement. Le diagramme peut comporter de plus un axe d'abscisses porteur de distances cumulées parcourues par l'aéronef, en partant d'une origine pouvant être placée à une extrémité gauche ou droite de l'axe d'abscisses respectivement dans la première position et la deuxième position. Par définition le symbole d'aéronef peut plutôt se trouver sur la gauche de l'axe d'abscisses et le symbole d'aire d'atterrissage sur la droite.

Selon une possibilité compatible avec les précédentes et en présence d'une image verticale, le générateur de symboles peut être configuré pour déterminer si ledit éloignement est supérieur à un seuil maximal et dans ce cas pour affecter l'aéronef automatiquement à ladite origine, pour paramétrer ledit référentiel selon un référentiel absolu dans lequel chaque symbole d'affichage est associé à une latitude ainsi qu'à une longitude et à une altitude, et pour paramétrer ledit positionnement selon la première position.

A grande distance de l'aire d'atterrissage, la configuration d'affichage permet de présenter les différents points d'affichage à un opérateur de manière globale, avec une précision acceptable.

Selon une possibilité compatible avec les précédentes et en présence d'une image verticale, le générateur de symboles peut être configuré pour déterminer si ledit éloignement est inférieur ou égal à un seuil maximal et supérieur à un seuil minimal, et dans ce cas pour affecter automatiquement l'aéronef à ladite origine, pour paramétrer ledit référentiel selon un référentiel absolu, et pour paramétrer ledit positionnement selon la première position.

A moyenne distance de l'aire d'atterrissage, l'image verticale a pour origine l'aéronef pour surveiller le déplacement de l'aéronef dans un référentiel absolu. L'opérateur surveille le déplacement de l'aéronef « vu de l'aéronef ».

Selon une possibilité compatible avec les précédentes et en présence d'une image verticale, le générateur de symboles peut être configuré pour déterminer si ledit éloignement est inférieur ou égal à un seuil minimal et supérieur à un seuil de proximité, et dans ce cas pour affecter automatiquement l'aire d'atterrissage à ladite origine, pour paramétrer ledit référentiel selon un référentiel relatif centré sur l'aire d'atterrissage, pour paramétrer ledit positionnement selon la deuxième position.

A courte distance de l'aire d'atterrissage, l'image verticale a pour origine l'aire d'atterrissage et est déterminée dans un référentiel relatif précis. L'opérateur surveille le déplacement de l'aéronef « vu de l'aire d'atterrissage ».

Selon une possibilité compatible avec les précédentes et en présence d'une image verticale, ledit générateur de symboles peut être configuré pour déterminer si ledit éloignement est inférieur ou égal à un seuil de proximité, et dans ce cas pour afficher une échelle d'altitude par rapport à une position moyenne de l'aire d'atterrissage depuis un temps prédéterminé, ledit symbole d'aéronef et ledit symbole d'aire d'atterrissage qui représente aussi un symbole de passage pointant ladite échelle d'altitude.

L'image verticale peut être réduite à une échelle d'altitude à très courte distance pour visualiser la position relative en élévation de l'aéronef et de l'aire d'atterrissage.

Selon une possibilité compatible avec les précédentes, ladite interface homme-machine peut comporter au moins un senseur parmi les senseurs suivants : un senseur de positionnement de l'aéronef dans un référentiel absolu, un senseur de positionnement de l'aire d'atterrissage dans un repère absolu, un senseur d'altitude de l'aéronef, un senseur d'altitude de l'aire d'atterrissage, un senseur de positionnement relatif de l'aéronef et de l'aire d'atterrissage.

Par exemple, un senseur de positionnement de l'aéronef dans un repère absolu peut comprendre une centrale inertielle et/ou un récepteur d'un système de positionnement par satellites. De même, un senseur de positionnement de l'aire d'atterrissage dans un repère absolu peut comprendre une centrale inertielle et/ou un récepteur d'un système de positionnement par satellites.

Un senseur d'altitude de l'aéronef peut comprendre une radiosonde, un altimètre, un récepteur d'un système de positionnement par satellites. De même, un senseur d'altitude de l'aire d'atterrissage peut comprendre une radiosonde, un altimètre, un récepteur d'un système de positionnement par satellites.

Un senseur de positionnement relatif de l'aéronef et de l'aire d'atterrissage peut par exemple comprendre le système connu sous la marque deckfinder^{®}.

Selon une possibilité compatible avec les précédentes, ladite interface homme-machine peut comporter au moins une interface de validation en liaison avec un émetteur et configurée pour émettre vers l'aéronef un signal porteur d'une autorisation de poursuivre le vol vers ou en s'éloignant de l'aire d'atterrissage.

L'opérateur peut manipuler cette interface de validation pour interrompre un atterrissage ou un décollage en fonction de ou des images affichées.

L'invention et ses avantages apparaîtront avec plus de détails dans le cadre de la description qui suit avec des exemples donnés à titre illustratif en référence aux figures annexées qui représentent :
la figure 1, un schéma illustrant une interface homme-machine selon l'invention utilisée lors d'un déplacement d'un aéronef vers ou à partir d'une aire d'atterrissage,
la figure 2, un schéma illustrant l'éloignement d'un aéronef et d'une aire d'atterrissage,
la figure 3, une vue présentant une interface homme-machine en présence d'un éloignement supérieur à un seuil maximal,
la figure 4, une vue présentant une interface homme-machine en présence d'un éloignement inférieur ou égal au seuil maximal et supérieur à un seuil minimal et une représentation selon un premier mode,
la figure 5, une vue présentant une interface homme-machine en présence d'un éloignement inférieur ou égal au seuil maximal et supérieur à un seuil minimal et une représentation selon un deuxième mode,
la figure 6, une vue présentant une interface homme-machine en présence d'un éloignement inférieur ou égal au seuil minimal et supérieur à un seuil de proximité et une représentation selon un premier mode,
la figure 7, une vue présentant une interface homme-machine en présence d'un éloignement inférieur ou égal au seuil minimal et supérieur à un seuil de proximité et une représentation selon un deuxième mode, et
la figure 8, une vue présentant une interface homme-machine en présence d'un éloignement inférieur ou égal au seuil de proximité.

Les éléments présents dans plusieurs figures distinctes sont affectés d'une seule et même référence.

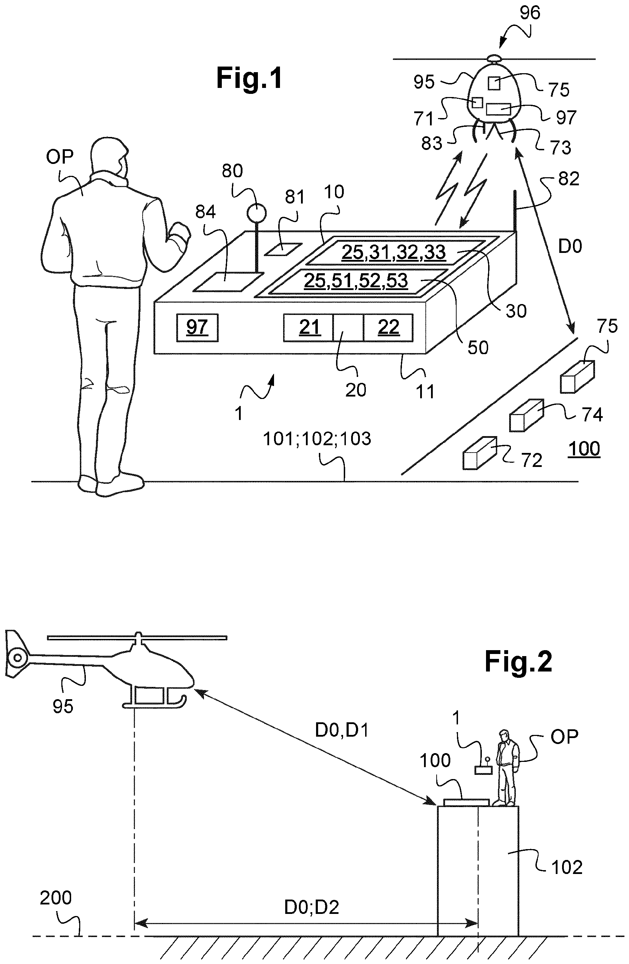

La figure 1 présente une interface homme-machine 1. Cette interface homme-machine 1 permet d'aider un opérateur OP à surveiller, voire à piloter, un aéronef 95 se déplaçant selon une trajectoire vers ou à partir d'une aire d'atterrissage 100. Cette aire d'atterrissage 100 peut être située sur un sol 101, un objet immobile et par exemple un immeuble 102 muni d'un vertiport, ou encore sur un objet mobile et éventuellement un véhicule tel un bateau 103 par exemple. L'opérateur OP peut alors se situer à proximité de l'aire d'atterrissage 100 pour surveiller le déplacement de l'aéronef 95, voire pour le piloter.

Par exemple, mais non obligatoirement, l'aéronef 95 peut comprendre au moins un rotor 96 participant à sa sustentation et/ou à son avancement. L'aéronef 95 peut comprendre un pilote humain embarqué ou non embarqué, ou peut être piloté par un pilote automatique voire par l'opérateur OP à l'aide de l'interface homme-machine 1.

La trajectoire à suivre comporte au moins un point de passage par lequel l'aéronef 95 doit passer. Chaque point de passage peut être défini au moins par une altitude ou une hauteur, et une distance le séparant de l'aire d'atterrissage 100. La trajectoire peut être établie de manière à s'étendre à partir de l'aire d'atterrissage 100 selon le sens du vent, voire face au vent.

Dès lors, l'interface homme-machine 1 peut comprendre un afficheur 10, éventuellement porté par un boîtier 11. Un tel afficheur 10 peut comporter par exemple un ou plusieurs écrans.

De plus, l'interface homme-machine 1 comprend un générateur de symboles 20, éventuellement porté par le boîtier 11, qui est configuré pour piloter un affichage sur l'afficheur 10 d'au moins une image 30, 50 selon une configuration d'affichage variable.

Chaque image 30, 50 comprend plusieurs symboles d'affichage 25 illustrés par la suite. La configuration d'affichage permet à l'interface homme-machine 1 de savoir comment positionner les divers symboles d'affichage 25 sur l'afficheur 10. En particulier, ces symboles d'affichage 25 comprennent un symbole d'aéronef 31, 51 représentant l'aéronef 95, un symbole d'aire d'atterrissage 32, 52 représentant l'aire d'atterrissage 100 et au moins un symbole de passage 33, 53 représentant un point de passage de la trajectoire.

Le générateur de symboles 20 peut comprendre au moins une unité de traitement pour notamment calculer l'emplacement de chaque symbole d'affichage 25 en fonction de la configuration d'affichage courante. L'expression « unité de traitement » désigne un dispositif pouvant comprendre par exemple au moins un processeur 21 et au moins une mémoire 22, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Dès lors, le générateur de symboles 20 est configuré pour calculer l'emplacement des divers symboles et transmettre un signal à l'afficheur 10 afin que l'afficheur 10 affiche la ou les images 30, 50 requises.

Par ailleurs, l'interface homme-machine 1 peut comprendre une pluralité de senseurs, en communication par une liaison filaire ou non filaire avec le générateur de symboles.

Ainsi, l'interface homme-machine 1 peut comporter au moins un senseur parmi les senseurs suivants : un senseur 71 de positionnement de l'aéronef 95 dans un référentiel absolu, par exemple agencé sur l'aéronef 95, un senseur 72 de positionnement de l'aire d'atterrissage dans un repère absolu, par exemple agencé sur l'aire d'atterrissage 100, un senseur 73 d'altitude de l'aéronef 95, par exemple agencé sur l'aéronef 95, un senseur 74 d'altitude de l'aire d'atterrissage 100, par exemple agencé sur l'aire d'atterrissage 100, un senseur 75 de positionnement relatif de l'aéronef 95 et de l'aire d'atterrissage 100. Un tel senseur 75 de positionnement relatif de l'aéronef 95 et de l'aire d'atterrissage 100 peut comprendre deux modules agencés respectivement sur l'aéronef 95 et sur l'aire d'atterrissage 100 par exemple.

Par ailleurs, l'interface homme-machine 1 peut comprendre une pluralité d'interfaces de commande manoeuvrables par l'opérateur OP, par exemple portées par le boîtier 11. Chaque interface de commande peut prendre la forme d'un bouton, d'un levier, d'un secteur tactile d'un écran, d'un clavier, d'une souris, d'un trackball, ces exemples étant donnés à titre illustratif uniquement.

Ainsi, l'interface homme-machine 1 peut comporter au moins une interface de validation 81 en liaison avec un émetteur 82. L'interface de validation 81 peut générer un signal porteur d'une autorisation de poursuivre ou non le vol vers ou en s'éloignant de l'aire d'atterrissage 100, ce signal étant transmis par l'émetteur 82 vers une antenne 83 de l'aéronef 95. Un pilote humain ou automatique de l'aéronef 95 peut alors poursuivre ou interrompre le suivi de la trajectoire.

L'interface homme-machine 1 peut comporter une interface de paramétrage 84 pour, par exemple, paramétrer un axe d'approche ou le sens du vent au niveau de l'aire d'atterrissage 100. Cette interface de paramétrage 84 peut transmettre un signal de paramétrage porteur dudit axe d'approche ou dudit sens du vent vers un calculateur de pilotage 97. Ce calculateur de pilotage 97 peut appartenir à l'aéronef 95 et dans ce cas le signal de paramétrage est transmis au calculateur de pilotage 97 via l'émetteur 82 et l'antenne 83. Alternativement, le calculateur de pilotage 97 peut appartenir à l'interface homme-machine 1.

Le calculateur de pilotage 97 peut comprendre une ou plusieurs unités de traitement. Dès lors, le calculateur de pilotage 97 peut être configuré pour déterminer la trajectoire à suivre de manière connue.

L'interface homme-machine 1 peut comporter au moins une interface de grossissement communiquant avec le générateur de symboles 20, ladite interface de grossissement transmettant au générateur de symboles 20 un signal d'ajustement d'un zoom de ladite image 30,50.

L'interface homme-machine 1 peut comporter au moins une interface de pilotage 80 apte à générer un signal de pilotage transmis à l'aéronef 95, via l'émetteur 82 et l'antenne 83, transmis à un ou plusieurs actionneurs de l'aéronef 95 aptes à modifier le déplacement de l'aéronef 95.

Indépendamment de ces options, la configuration d'affichage est en outre susceptible de varier. En particulier, le générateur de symboles 20 est configuré pour appliquer, à chaque instant de calcul, la configuration d'affichage requise en fonction de l'éloignement D0 entre l'aéronef 95 et l'aire d'atterrissage 100. Cette configuration d'affichage peut comprendre au moins une des variables paramétrables suivantes : une orientation de ladite image 30, 50 par rapport à l'afficheur 10, un positionnement d'un ancrage de l'image 30,50 par rapport à l'afficheur 10, un référentiel à utiliser pour calculer l'emplacement de chaque symbole d'affichage 25, une variable de représentation pour afficher des distances à l'aide de cercles ou d'arcs de cercles, la détermination d'un objet affecté à une origine d'un diagramme, le positionnement d'une telle origine au sein du diagramme.

En particulier, ledit générateur de symboles 20 est configuré pour calculer un emplacement de chaque symbole d'affichage 25 sur l'afficheur 10, en fonction de la configuration d'affichage à appliquer à chaque instant de calcul.

La figure 2 illustre diverses manières de calculer cet éloignement D0, en présentant à titre d'exemple un aéronef 95 souhaitant atterrir sur une aire d'atterrissage 100 disposée au sommet d'un immeuble 102.

Selon une première variante, l'éloignement D0 correspond à la plus petite distance D1 séparant l'aéronef 95 et l'aire d'atterrissage 100.

Selon une deuxième variante, l'éloignement D0 correspond à la plus petite distance D2 séparant des projections de l'aéronef 95 et de l'aire d'atterrissage 100 dans un plan horizontal 200.

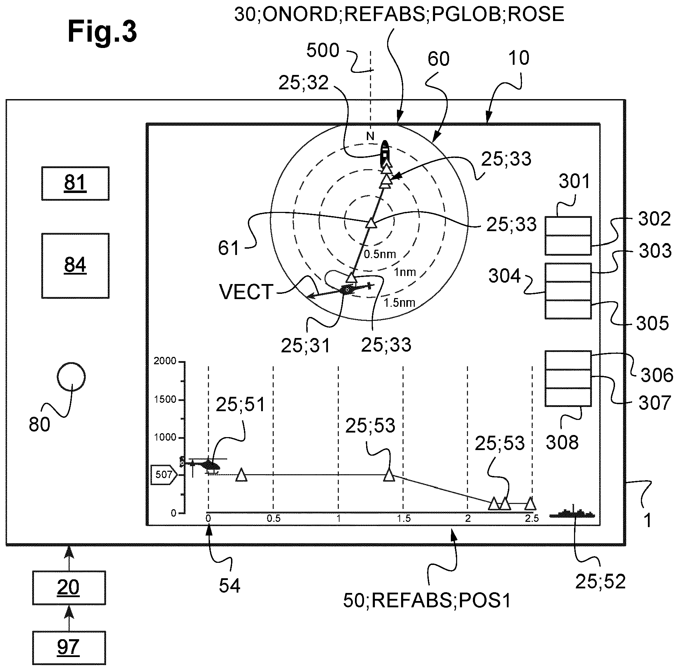

Les figures 3 à 8 illustrent une interface homme-machine 1 utilisée lors de l'atterrissage d'un aéronef 95 sur une aire d'atterrissage 100 de type bateau. Toutefois, ces figures sont aussi applicables pour un autre type d'aire d'atterrissage 100 et/ou un décollage à partir de l'aire d'atterrissage 100.

En référence à la figure 3, un calculateur de pilotage 97 calcule une trajectoire à suivre par l'aéronef 95 et la transmet au générateur de symboles 20 pour traitement. Selon un exemple, l'opérateur OP sollicite à cet effet l'interface de paramétrage 84 pour paramétrer un sens du vent, puis un calculateur de pilotage 97 de l'aéronef 95 reçoit ce sens du vent et calcule en conséquence la trajectoire. Les paramètres de cette trajectoire sont ensuite transmis par des moyens de communication usuels à l'interface homme-machine 1.

Le générateur de symboles 20 peut alors déterminer, pour la ou les images 30, 50 à afficher, une configuration courante à appliquer et transmet à l'afficheur 10 les paramètres de la ou des images 30,50 à afficher.

En particulier, l'afficheur 10 peut afficher une image horizontale 30 contenant au moins un symbole d'affichage 25 vu verticalement selon un référentiel terrestre et/ou une image verticale 50 présentant au moins le symbole d'aéronef 51 et le symbole d'aire d'atterrissage 52 à des altitudes respectives.

Quelle que soit l'image, la configuration d'affichage peut comprendre un référentiel applicable pour calculer les positions des différents symboles d'affichage 25 en fonction des coordonnées des objets associés, et notamment de l'aéronef 95 associé au symbole d'aéronef et de l'aire d'atterrissage 100 associée au symbole d'aire d'atterrissage. Ainsi, le générateur de symboles 20 peut être configuré pour utiliser les senseurs associés à un référentiel absolu REFABS dans lequel chaque symbole d'affichage 25 est associé à une latitude ainsi qu'à une longitude voire à une altitude, à un référentiel relatif REFREL centré sur l'aire d'atterrissage 100, à un référentiel d'aire moyenne REFMOY centré sur une position moyenne d'une aire d'atterrissage 100 mobile depuis un temps prédéterminé TPS, par exemple de l'ordre de 30 secondes. La position moyenne peut être calculée par le générateur de symboles ou une autre unité de traitement à l'aide des positions successives mesurées pendant ledit temps prédéterminé TPS.

Pour l'image horizontale 30, le générateur de symboles 20 peut être configuré pour choisir l'orientation parmi une liste comprenant au moins une des orientations suivantes : une orientation ONORD par rapport au nord pour qu'un point de l'image horizontale 30 illustrant le nord magnétique ou géographique soit positionné dans un endroit prédéterminé de l'afficheur 10, une orientation OCAP par rapport au cap pour qu'un cap de l'aéronef 95 soit positionné d'une manière prédéterminée sur l'afficheur 10, une orientation OAIRE par rapport à l'aire d'atterrissage 100 pour que le symbole d'aire d'atterrissage soit positionné d'une manière prédéterminée sur l'afficheur 10.

Pour l'image horizontale 30, le générateur de symboles 20 peut être configuré pour définir un ancrage de l'image horizontale 30, à savoir d'un point de l'image 30 qui reste immobile sur l'afficheur 10, en choisissant ce positionnement parmi une liste comprenant au moins un des positionnements suivants : un positionnement global PGLOB permettant d'afficher chaque symbole d'affichage 25 sur l'afficheur 10, un positionnement PHC par rapport à l'aéronef 95 en positionnant le symbole d'aéronef 31 d'une manière prédéterminée sur l'afficheur 10, un positionnement PAIRE par rapport à l'aire d'atterrissage 100 en positionnant le symbole d'aire d'atterrissage 32 d'une manière prédéterminée et fixe sur l'afficheur 10.

Lorsque le symbole d'aire d'atterrissage 32 comprend un bateau 103, le positionnement par rapport à l'aire d'atterrissage 100 comporte un positionnement d'une représentation de la poupe 104 du bateau 103 à un emplacement prédéterminé sur ledit afficheur 10, éventuellement au dessus de la proue 105 du bateau 103.

Selon une éventualité, la configuration d'affichage comprend au moins les trois variables paramétrables précités.

Eventuellement, le générateur de symboles 20 peut être configuré pour paramétrer une variable de représentation de la configuration d'affichage, soit dans un premier mode ROSE selon lequel le générateur de symboles 20 est configuré pour afficher des cercles 60 concentriques porteurs de distances respectives centrés sur un centre 61 fixe sur l'afficheur, et éventuellement associé à un symbole d'affichage qui varie en fonction dudit éloignement D0, soit dans un deuxième mode SECT selon lequel le générateur de symboles 20 est configuré pour afficher des arcs de cercle 62 centrés sur un centre 61 fixe sur l'afficheur, et éventuellement associé à un symbole d'affichage qui varie en fonction dudit éloignement D0.

Pour l'image verticale 50, au moins tant que l'éloignement D0 est supérieur à un seuil de proximité SPROX, le générateur de symboles 20 est configuré pour positionner chaque symbole d'affichage 25 en fonction de :
- son espacement avec une origine 54, à savoir en fonction de l'espacement entre l'objet représenté par le symbole d'affichage 25 et l'objet représentant l'origine, et
- son altitude, à savoir en fonction de l'altitude de l'objet représenté par le symbole d'affichage 25.

Dès lors, le générateur de symboles 20 est configuré pour paramétrer l'origine en la choisissant dans une liste comprenant l'aéronef 95 et l'aire d'atterrissage 100 et pour paramétrer un positionnement de cette origine au sein de l'image verticale 50 afin de positionner ladite origine dans une première position POS1 ou une deuxième position POS2.

Dans ces conditions, le générateur de symboles 20 est configuré pour calculer l'éloignement D0 et le comparer à une pluralité de seuils, le paramétrage de la configuration d'affichage de chaque image variant en fonction de la plage de valeurs dans laquelle se trouve l'éloignement D0.

Eventuellement, l'image verticale 50 comporte une échelle d'altitude ayant au moins une limite variable en fonction dudit éloignement. Le générateur de symboles 20 peut être configuré pour paramétrer au moins une graduation de l'échelle d'altitude en fonction de l'éloignement courant.

La figure 3 illustre un instant de calcul durant lequel l'éloignement D0 est supérieur à un seuil maximal SMAX.

Selon l'exemple illustré, le gestionnaire de symboles 20 calcule l'emplacement des divers symboles d'affichage 25 en utilisant les mesures provenant du senseur 71 de positionnement de l'aéronef 95 dans un référentiel absolu et du senseur 72 de positionnement de l'aire d'atterrissage 100 dans un repère absolu. Chaque symbole d'affichage 25 est positionné sur l'image horizontale 30 ou verticale 50 en fonction de la latitude et de la longitude de l'objet associé.

De plus, le générateur de symboles 20 adapte un facteur de grossissement de l'image horizontale 30 pour paramétrer la configuration d'affichage selon un positionnement global PGLOB permettant d'afficher chaque symbole d'affichage 25 sur l'afficheur 10.

Enfin, le générateur de symboles 20 oriente l'image horizontale 30 sur l'afficheur 10 selon l'orientation ONORD par rapport au nord. Le symbole « N » est en particulier positionné le long d'une ligne 500 prédéterminée sensiblement verticale sur la figure 3.

Le cas échéant, le générateur de symboles 20 applique le premier mode ROSE pour que l'image horizontale comprenne des cercles 60 concentriques porteurs de distances autour d'un centre 61. Ce centre 61 peut être positionné au niveau d'un barycentre des symboles d'affichage 25. Ce barycentre peut en outre représenter un point fixe de l'image.

Selon l'exemple illustré, le gestionnaire de symboles 20 calcule l'emplacement des divers symboles d'affichage 25 sur l'image verticale 50 en utilisant non seulement les mesures provenant du senseur 71 de positionnement de l'aéronef 95 dans un référentiel absolu, du senseur 72 de positionnement de l'aire d'atterrissage 100 dans un repère absolu, mais aussi du senseur 73 d'altitude de l'aéronef 95 et du senseur 74 d'altitude de l'aire d'atterrissage 100. Chaque symbole d'affichage 25 est positionné sur l'image verticale 50 en fonction de la latitude, de la longitude et de l'altitude de l'objet correspondant. Cette image verticale 50 comporte ainsi un axe d'ordonnées gradué en altitude et un axe des abscisses présentant des distances par rapport à l'origine.

De plus, le générateur de symboles 20 affecte à l'origine 54 l'aéronef 95 et la positionne selon la première position POS1. L'origine 54 se situe alors à gauche de l'axe des abscisses, le symbole d'aéronef 51 se trouvant au droit de l'origine 54. Les autres symboles d'affichage 25 sont positionnés à l'altitude du point de passage ou de l'aire d'atterrissage 100 correspondant et à une distance de l'origine 54 image de la distance séparant de l'aéronef 95 le point de passage ou l'aire d'atterrissage 100 correspondant.

Selon un autre aspect et quel que soit l'éloignement D0, le générateur de symboles 20 peut afficher la valeur de l'attitude courante de l'aéronef 95.

Selon un autre aspect et quel que soit l'éloignement D0, le générateur de symboles 20 peut afficher sur l'afficheur 10 un symbole REF illustrant le référentiel appliqué.

Selon un autre aspect et quel que soit l'éloignement D0, le générateur de symboles 20 peut afficher sur l'afficheur 10, une flèche VECT illustrant le vecteur vitesse de l'aéronef 95. A cet effet, le générateur de symboles 20 peut communiquer avec un senseur usuel de l'aéronef 95, tel qu'une centrale inertielle.

Eventuellement et quel que soit l'éloignement D0, le générateur de symboles 20 peut afficher sur l'afficheur 10 des cases 301-308, éventuellement tactiles, illustrant le réglage de la configuration d'affichage courante. Par exemple, le fond de chaque case peut varier en fonction de la configuration courante. Par exemple, le fond d'une case présente un premier aspect lorsque le réglage associé est appliqué, un deuxième aspect lorsque le réglage associé n'est pas appliqué mais peut être sélectionné manuellement, voire un troisième aspect lorsque le réglage associé n'est pas appliqué mais ne peut pas être sélectionné manuellement. Par exemple, l'aspect d'une case varie en modifiant la couleur du fond de la case. Ainsi, l'afficheur 10 peut comprendre une case 301 liée à l'application du deuxième mode SEC, une case 302 liée à l'application du premier mode ROSE, une case 303 liée à l'orientation ONORD, une case 304 liée à l'orientation OCAP, une case 305 liée à l'orientation OAIRE, une case 306 liée au positionnement global PGLOB, une case 307 liée au positionnement PHC, une case 308 liée au positionnement PAIRE.

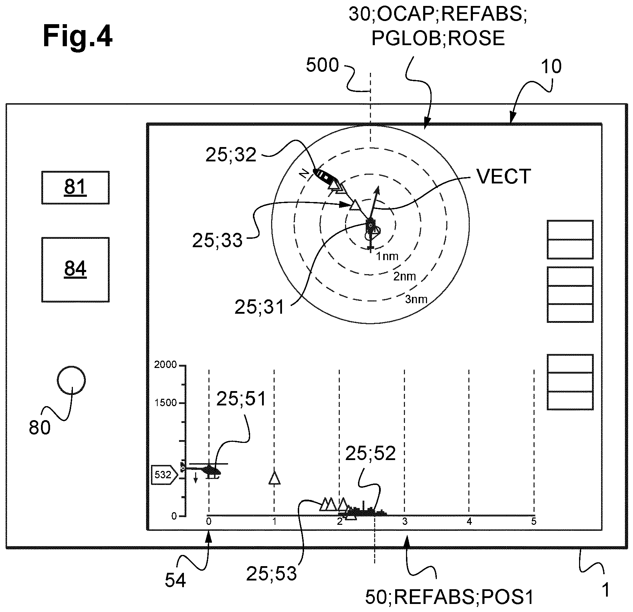

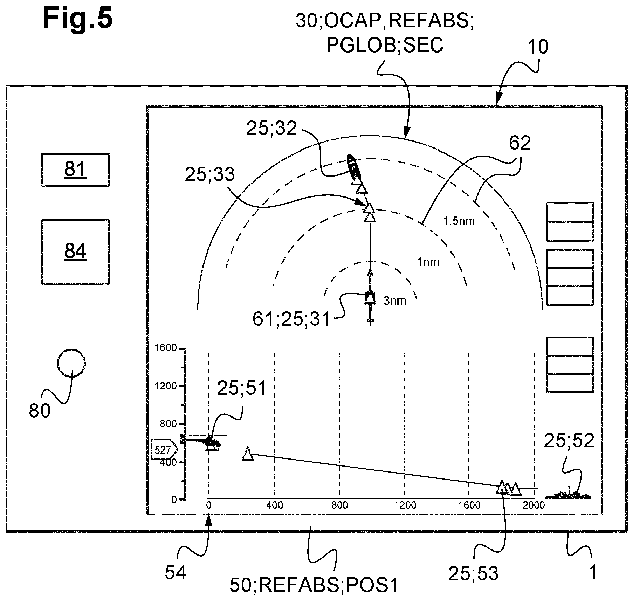

Les figures 4 et 5 illustrent des instants de calcul durant lesquels l'éloignement D0 est inférieur ou égal au seuil maximal SMAX et supérieur au seuil minimal SMIN. Seul l'afficheur 10 est représenté pour ne pas alourdir les figures 4 et 5.

Selon l'exemple illustré, le gestionnaire de symboles 20 calcule l'emplacement des divers symboles d'affichage 25 en utilisant les mesures provenant du senseur 71 de positionnement de l'aéronef 95 dans un référentiel absolu et du senseur 72 de positionnement de l'aire d'atterrissage 100 toujours dans un repère absolu REFABS. Chaque symbole d'affichage 25 est positionné sur l'image horizontale 30 ou verticale 50 en fonction de la latitude et de la longitude de l'objet associé.

De plus, le générateur de symboles 20 applique le positionnement PHC par rapport à l'aéronef 95, en figeant la position du symbole d'aéronef 31 dans une position prédéterminée, et en déplaçant les autres symboles d'affichage 25 par rapport au symbole d'aéronef 31.

Enfin, le générateur de symboles 20 oriente l'image horizontale 30 sur l'afficheur 10 selon l'orientation OCAP par rapport au cap. Le symbole d'aéronef 31 est positionné pour que son cap soit dirigé le long de la ligne 500 prédéterminée sensiblement verticale mentionnée précédemment, et vers le haut de l'afficheur 10. Eventuellement, le générateur de symboles 20 adapte un facteur de grossissement de l'image horizontale 30 pour afficher sur l'afficheur 10 chaque symbole de passage 33 présent entre le symbole d'aéronef 31 et le symbole d'aire d'atterrissage 32.

Selon l'exemple de la figure 4, le générateur de symboles 20 applique par défaut le premier mode ROSE pour que l'image horizontale 30 comprenne des cercles 60 concentriques porteurs de distances autour d'un centre 61. Le symbole d'aéronef 31 est désormais par exemple positionné sur ce centre 61.

Selon l'exemple de la figure 5, le générateur de symboles 20 applique le deuxième mode SEC pour que l'image horizontale 30 comprenne des arcs de cercles 62 concentriques porteurs de distances autour du centre 61. Le symbole d'aéronef 31 est par exemple positionné sur ce centre 61.

Selon les exemples illustrés, le gestionnaire de symboles 20 calcule l'emplacement des divers symboles d'affichage 25 sur l'image verticale 50 en utilisant non seulement les mesures provenant du senseur 71 de positionnement de l'aéronef 95 dans un référentiel absolu, du senseur 72 de positionnement de l'aire d'atterrissage 100 dans un repère absolu, mais aussi du senseur 73 d'altitude de l'aéronef 95 et du senseur 74 d'altitude de l'aire d'atterrissage 100. Chaque symbole de passage 33 est positionné sur l'image verticale 50 en fonction de la latitude, de la longitude et de l'altitude de l'objet correspondant. Cette image verticale 50 comporte ainsi un axe d'ordonnées gradué en altitude et un axe des abscisses présentant des distances par rapport à l'origine 54.

De plus, le générateur de symboles 20 affecte à l'origine 54 l'aéronef 95 et la positionne selon la première position POS1. L'origine 54 se situe alors à gauche de l'axe des abscisses, le symbole d'aéronef 51 se trouvant au droit de l'origine 54. Les autres symboles d'affichage 25 sont positionnés à l'altitude du point de passage ou de l'aire d'atterrissage 100 correspondant et à une distance de l'origine 54 image de la distance séparant de l'aéronef 95 le point de passage ou l'aire d'atterrissage 100 correspondant.

Par ailleurs, l'image verticale 50 peut comporter une échelle d'altitude s'étendant de 0 à une limite égale à une limite maximale de 2000 pieds selon l'exemple illustré. Il est rappelé qu'un pied est égal à 0.3048 mètre.

Selon un autre aspect, le générateur de symboles 20 peut afficher sur l'afficheur 10 un symbole REF illustrant le référentiel appliqué.

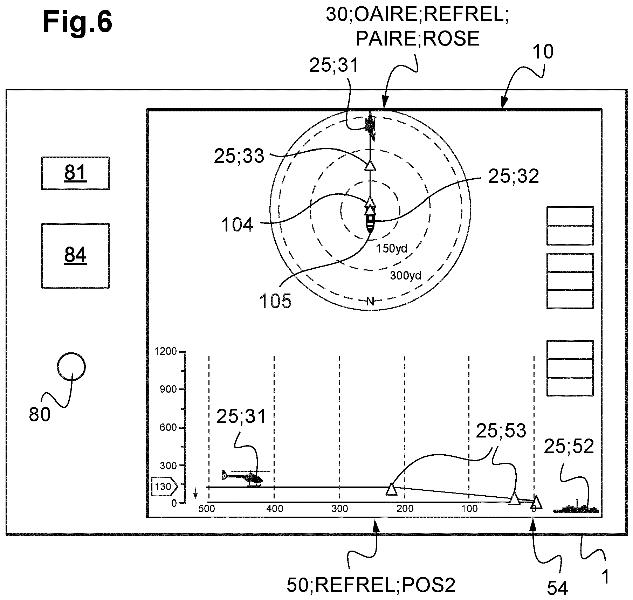

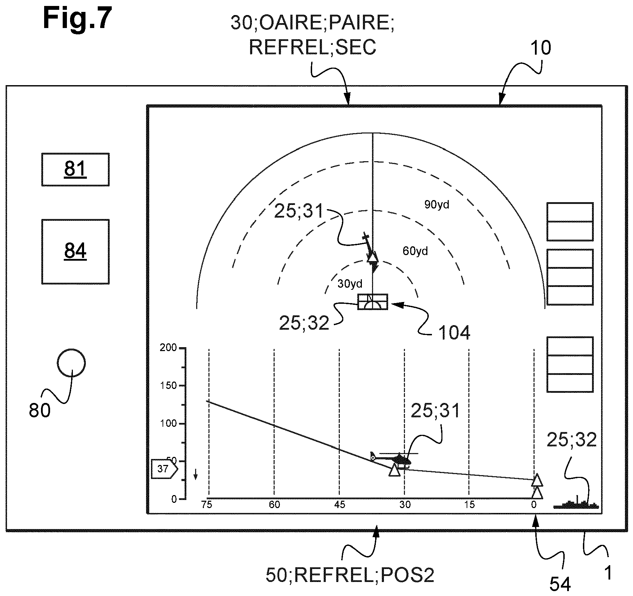

Les figures 6 et 7 illustrent des instants de calcul durant lesquels l'éloignement D0 est inférieur ou égal au seuil minimal SMIN et supérieur à un seuil de proximité SPROX. Seul l'afficheur 10 est représenté pour ne pas alourdir les figures 6 et 7.

Selon l'exemple illustré, le gestionnaire de symboles 20 calcule l'emplacement des divers symboles d'affichage 25 en utilisant les mesures provenant du senseur 75 de positionnement relatif de l'aéronef 95 et de l'aire d'atterrissage 100.

De plus, le générateur de symboles 20 applique le positionnement PAIRE par rapport à l'aire d'atterrissage 100, en calculant les positions des symboles d'affichage 25 par rapport au symbole d'aire d'atterrissage 32,52 qui est immobile sur l'afficheur 10.

Enfin, le générateur de symboles 20 oriente l'image horizontale 30 sur l'afficheur 10 selon l'orientation OAIRE par rapport à l'aire d'atterrissage 100. Le symbole d'aire d'atterrissage 32 est positionné pour s'étendre le long de la ligne 500 prédéterminée sensiblement verticale mentionnée précédemment. Eventuellement, le générateur de symboles 20 adapte un facteur de grossissement de l'image horizontale 30 pour afficher sur l'afficheur 10 chaque symbole de passage 33 présent entre le symbole d'aéronef 31 et le symbole d'aire d'atterrissage 32.

Selon l'exemple de la figure 6, le générateur de symboles 20 applique le premier mode ROSE pour que l'image horizontale 30 comprenne des cercles 60 concentriques porteurs de distances autour d'un centre 61. Le symbole d'aire d'atterrissage 32 est désormais par exemple positionné sur ce centre 61.

Par ailleurs l'image verticale 50 peut comporter une échelle d'altitude s'étendant de 0 à une limite égale à une limite intermédiaire de 1200 pieds selon l'exemple illustré.

Selon l'exemple de la figure 7, le générateur de symboles 20 applique le deuxième mode SEC pour que l'image horizontale 30 comprenne des arcs de cercle 62 concentriques porteurs de distances autour du centre 61. Le symbole d'aire d'atterrissage 32 est désormais par exemple positionné sur ce centre 61. Le symbole d'aire d'atterrissage 32 peut comprendre une représentation de tout le bateau, de sa proue vers sa poupe sur la figure 6 et uniquement une représentation de sa poupe sur la figure 7.

Selon les exemples illustrés, le gestionnaire de symboles 20 calcule l'emplacement des divers symboles d'affichage 25 sur l'image verticale 50 en utilisant les mesures du senseur 75 de positionnement relatif de l'aéronef 95 et de l'aire d'atterrissage 100. Chaque symbole d'affichage 25 est positionné sur l'image verticale 50 en fonction de la latitude, de la longitude et de l'altitude de l'objet correspondant. Cette image verticale 50 comporte ainsi un axe d'ordonnées gradué en altitude et un axe des abscisses présentant des distances par rapport à l'origine 54.

De plus, le générateur de symboles 20 affecte à l'origine 54 l'aire d'atterrissage 100 et la positionne selon la deuxième position POS2. L'origine 54 se situe alors à droite de l'axe des abscisses, le symbole d'aire d'atterrissage 52 pointant l'origine 54. Les autres symboles de passage 53 sont positionnés à l'altitude du point de passage ou de l'aéronef 95 correspondant et à une distance de l'origine 54 image de la distance séparant de l'aire d'atterrissage 100 le point de passage ou l'aéronef 95 correspondant.

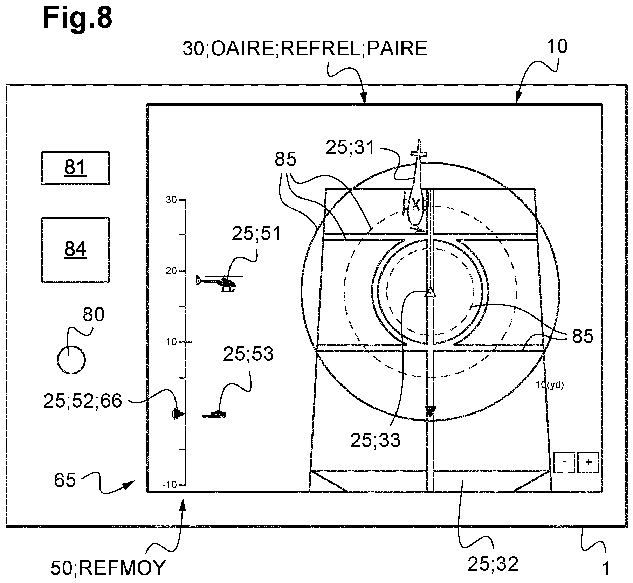

La figure 8 illustre un instant de calcul durant lequel l'éloignement D0 est inférieur ou égal au seuil de proximité SPROX.

L'image horizontale 30 peut être bâtie de la même manière que sur les figures 6 et 7, sans toutefois posséder les cercles ou arcs de cercle précités. Néanmoins, le symbole d'aire d'atterrissage 32 peut être plus gros pour bien représenter les proportions entre l'aéronef 95 et l'aire d'atterrissage 100. Eventuellement, le symbole d'aire d'atterrissage 32 comporte des traits 85 divers pour aider l'opérateur OP à visualiser la scène.

Par contre, l'image verticale 50 peut uniquement comprendre une échelle d'altitude 65. Cette échelle d'altitude peut être initialisée sur la position moyenne de l'aire d'atterrissage 100, la position moyenne de l'aire d'atterrissage 100 se trouvant à une altitude nulle sur cette échelle.

Par exemple, l'échelle d'altitude s'étend entre deux limites, respectivement de -10 pieds et +30 pieds selon l'exemple illustré.

Le gestionnaire de symboles 20 calcule l'emplacement du symbole d'aéronef 51 et du symbole d'aire d'atterrissage 52 par rapport à cette échelle d'altitude. En présence d'une aire d'atterrissage 100 mobile, le symbole d'aire d'atterrissage 52 peut ne pas pointer l'altitude nulle. Un symbole, par exemple de type triangulaire, peut pointer la position moyenne 66 de l'aire d'atterrissage sur l'échelle d'altitude, soit l'altitude nulle, pour optimiser la lecture de l'opérateur.

Selon un autre aspect, à tout moment ou lorsqu'au moins un point de passage est atteint, le gestionnaire de symboles 20 ou une autre unité de traitement de l'interface homme-machine 1 peut être configurée pour demander à l'opérateur OP de manoeuvrer l'interface de validation 81 pour poursuivre le suivi de la trajectoire, ou au contraire pour que l'aéronef adopte une attitude prédéterminée tel qu'un vol stationnaire ou un retour au point de départ.

Selon un autre aspect, à tout moment ou lorsqu'au moins un point de passage est atteint, l'opérateur peut piloter l'aéronef à l'aide de la ou des interfaces de pilotage 80.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Interface homme-machine (1) d'aide au pilotage pour surveiller un aéronef (95) se déplaçant selon une trajectoire vers ou à partir d'une aire d'atterrissage (100), ladite interface homme-machine (1) d'aide au pilotage comprenant un afficheur (10) et un générateur de symboles (20), ledit générateur de symboles (20) étant configuré pour piloter un affichage sur ledit afficheur (10) et selon une configuration d'affichage variable d'au moins une image (30, 50) comprenant plusieurs symboles d'affichage (25), lesdits plusieurs symboles d'affichage (25) comprenant un symbole d'aéronef (31, 51) illustrant ledit aéronef (95), un symbole d'aire d'atterrissage (32, 52) illustrant ladite aire d'atterrissage (100) et au moins un symbole de passage (33, 53) illustrant un point de passage de la trajectoire,
**caractérisée en ce que** ledit générateur de symboles (20) est configuré à chaque instant de calcul pour paramétrer ladite configuration d'affichage en fonction d'un éloignement (D0) entre l'aéronef (95) et ladite aire d'atterrissage (100), ledit générateur de symboles (20) étant configuré pour calculer un emplacement de chaque symbole d'affichage (25) sur l'afficheur (10) en fonction de la configuration d'affichage à chaque instant de calcul, ladite configuration d'affichage comprenant au moins une des variables paramétrables suivantes : une orientation de ladite image (30, 50) par rapport à l'afficheur (10), un positionnement d'un ancrage de l'image (30, 50) par rapport à l'afficheur (10) et un référentiel à utiliser pour calculer ledit emplacement de chaque symbole d'affichage (25).

2. Interface homme-machine selon la revendication 1,
**caractérisée en ce que** ledit générateur de symboles (20) est configuré pour paramétrer ledit référentiel en choisissant ce référentiel parmi une liste comprenant au minimum un référentiel absolu (REFABS) dans lequel chaque symbole d'affichage (25) est associé à une latitude ainsi qu'à une longitude et à une altitude, un référentiel relatif (REFREL) centré sur l'aire d'atterrissage (100), un référentiel d'aire moyenne (REFMOY) centré sur une position moyenne depuis un temps prédéterminé (TPS)d'une aire d'atterrissage (100) mobile.

3. Interface homme-machine selon l'une quelconque des revendications 1 à 2,
**caractérisée en ce que** ladite au moins une image comprend une image horizontale (30) contenant au moins un symbole d'affichage (25) vu verticalement selon un référentiel terrestre.

4. Interface homme-machine selon la revendication 3,
**caractérisée en ce que** ladite configuration d'affichage comprend au moins les trois dites variables paramétrables.

5. Interface selon l'une quelconque des revendications 3 à 4,
**caractérisée en ce que** ledit générateur de symboles (20) est configuré pour paramétrer ladite orientation de l'image horizontale (30) en choisissant cette orientation parmi une liste comprenant une orientation (ONORD) par rapport au nord pour qu'un point de l'image horizontale (30) illustrant le nord magnétique ou géographique soit positionné dans un endroit prédéterminé de l'afficheur (10), une orientation (OCAP) par rapport au cap pour qu'un cap de l'aéronef (95) soit positionné d'une manière prédéterminée sur l'afficheur (10), une orientation (OAIRE) par rapport à l'aire d'atterrissage (100) pour que le symbole d'aire d'atterrissage (100) soit positionné d'une manière prédéterminée sur l'afficheur (10).

6. Interface homme-machine selon l'une quelconque des revendications 3 à 5,
**caractérisée en ce que** ledit générateur de symboles (20) est configuré pour paramétrer ledit positionnement d'un ancrage de l'image horizontale (30) en choisissant ce positionnement parmi une liste comprenant un positionnement global (PGLOB) permettant d'afficher chaque symbole d'affichage (25) sur l'afficheur (10), un positionnement (PHC) par rapport à l'aéronef (95) en positionnant le symbole d'aéronef (31) d'une manière prédéterminée et fixe sur l'afficheur (10), un positionnement (PAIRE) par rapport à l'aire d'atterrissage en positionnant le symbole d'aire d'atterrissage (32) d'une manière prédéterminée et fixe sur l'afficheur (10).

7. Interface homme-machine selon la revendication 6,
**caractérisée en ce que** ledit symbole d'aire d'atterrissage (32) comprenant une représentation (104) d'une poupe d'un bateau (103), ledit positionnement par rapport à l'aire d'atterrissage (100) comporte un positionnement de ladite représentation (104) de ladite poupe sur ledit afficheur (10) à un emplacement prédéterminé.

8. Interface homme-machine selon l'une quelconque des revendications 3 à 7,
**caractérisée en ce que**, ladite configuration d'affichage comporte une variable de représentation, le générateur de symboles (20) étant configuré pour paramétrer ladite variable de représentation soit dans un premier mode (ROSE) selon lequel le générateur de symboles (20) est configuré pour afficher des cercles (60) concentriques porteurs de distances respectives centrés sur un centre (61) fixe sur l'afficheur, soit dans un deuxième mode (SECT) selon lequel le générateur de symboles (20) est configuré pour afficher des arcs de cercle (62) centrés sur un centre (61) fixe sur l'afficheur.

9. Interface homme-machine selon l'une quelconque des revendications 3 à 8,
**caractérisée en ce que** ledit générateur de symboles (20) est configuré pour déterminer si ledit éloignement (D0) est supérieur à un seuil maximal (SMAX) et dans ce cas pour paramétrer automatiquement ladite orientation de l'image horizontale (30) selon une orientation (ONORD) par rapport au nord pour qu'un point de l'image horizontale (30) illustrant le nord magnétique ou géographique soit positionné dans un endroit prédéterminé de l'afficheur (10), pour paramétrer ledit référentiel selon un référentiel absolu (REFABS) dans lequel chaque symbole d'affichage (25) est associé à une latitude ainsi qu'à une longitude et à une altitude, et pour paramétrer ledit positionnement selon un positionnement global (PGLOB) permettant d'afficher chaque symbole d'affichage (25).

10. Interface homme-machine selon la revendication 9,
**caractérisée en ce que** ledit générateur de symboles (20) est configuré pour paramétrer une variable de représentation de la configuration d'affichage dans un premier mode (ROSE) selon lequel le générateur de symboles (20) est configuré pour afficher des cercles (60) concentriques porteurs de distances autour d'un centre (61) positionné au niveau d'un barycentre des symboles d'affichage (25).

11. Interface homme-machine selon l'une quelconque des revendications 3 à 10,
**caractérisée en ce que** ledit générateur de symboles (20) est configuré pour déterminer si ledit éloignement (D0) est inférieur ou égal à un seuil maximal (SMAX) et supérieur à un seuil minimal (SMIN), et dans ce cas pour paramétrer ladite orientation de l'image horizontale selon une orientation (OCAP) par rapport au cap pour qu'un cap de l'aéronef (95) soit positionné d'une manière prédéterminée sur l'afficheur (10), pour paramétrer ledit référentiel selon un référentiel absolu (REFABS) dans lequel chaque symbole d'affichage (25) est associé à une latitude ainsi qu'à une longitude et à une altitude, et pour paramétrer par défaut ledit positionnement selon un positionnement (PHC) par rapport à l'aéronef.

12. Interface homme-machine selon l'une quelconque des revendications 3 à 11,
**caractérisée en ce que** ledit générateur de symboles (20) est configuré pour déterminer si ledit éloignement (D0) est inférieur ou égal à un seuil minimal (SMIN) et supérieur à un seuil de proximité (SPROX), et dans ce cas pour paramétrer ladite orientation selon une orientation (OAIRE) par rapport à l'aire d'atterrissage pour que le symbole d'aire d'atterrissage (100) soit positionnée d'une manière prédéterminée sur l'afficheur (10), pour paramétrer ledit référentiel selon un référentiel relatif (REFREL) centré sur l'aire d'atterrissage (100), pour paramétrer ledit positionnement selon un positionnement (PAIRE) par rapport à l'aire d'atterrissage en positionnant un symbole d'aire d'atterrissage (32) illustrant ladite aire d'atterrissage (100) d'une manière prédéterminée et fixe sur l'afficheur (10).

13. Interface homme-machine selon l'une quelconque des revendications 3 à 12,
**caractérisée en ce que** ledit générateur de symboles (20) est configuré pour déterminer si ledit éloignement (D0) est inférieur ou égal à un seuil de proximité (SPROX) et dans ce cas pour paramétrer automatiquement ladite orientation de l'image horizontale (30) selon une orientation (OAIRE) par rapport à l'aire d'atterrissage pour que le symbole d'aire d'atterrissage (100) soit positionnée d'une manière prédéterminée sur l'afficheur (10), pour paramétrer ledit référentiel selon un référentiel relatif (REFREL) centré sur l'aire d'atterrissage (100), et pour paramétrer ledit positionnement selon un positionnement (PAIRE) par rapport à l'aire d'atterrissage en positionnant le symbole d'aire d'atterrissage (32) d'une manière prédéterminée et fixe sur l'afficheur (10).

14. Interface homme-machine selon l'une quelconque des revendications 1 à 2,
**caractérisée en ce que** ladite au moins une image comprend une image verticale (50) présentant au moins le symbole d'aéronef (51) et le symbole d'aire d'atterrissage (52) à des altitudes respectives.

15. Interface homme-machine selon la revendication 14,
**caractérisée en ce qu'**au moins tant que ledit éloignement (D0) est supérieur à un seuil de proximité (SPROX), ledit générateur de symboles (20) est configuré pour positionner chaque symbole d'affichage (25) de l'image verticale (50) en fonction de son espacement avec une origine (54) et de son altitude, ladite configuration d'affichage comprenant au moins en tant que variables ladite origine (54) ainsi qu'un positionnement de ladite origine (54) sur l'afficheur (10) et ledit référentiel, ledit générateur de symboles (20) étant configuré pour paramétrer ladite origine en la choisissant dans une liste comprenant l'aéronef (95) et l'aire d'atterrissage (100), ledit générateur de symboles (20) étant configuré pour paramétrer ledit positionnement afin de positionner ladite origine dans une première position (POS1) ou une deuxième position (POS2) sur l'afficheur (10) en fonction dudit éloignement (D0).

16. Interface homme-machine selon la revendication 15,
**caractérisée en ce que** ledit générateur de symboles (20) est configuré pour déterminer si ledit éloignement (D0) est supérieur à un seuil maximal (SMAX) et dans ce cas pour affecter l'aéronef (95) automatiquement à ladite origine (54), pour paramétrer ledit référentiel selon un référentiel absolu (REFABS) dans lequel chaque symbole d'affichage (25) est associé à une latitude ainsi qu'à une longitude et à une altitude, et pour paramétrer ledit positionnement selon la première position (POS1).

17. Interface homme-machine selon l'une quelconque des revendications 15 à 16,
**caractérisée en ce que** ledit générateur de symboles (20) est configuré pour déterminer si ledit éloignement (D0) est inférieur ou égal à un seuil maximal (SMAX) et supérieur à un seuil minimal (SMIN), et dans ce cas pour affecter automatiquement l'aéronef (95) à ladite origine (54), pour paramétrer ledit référentiel selon un référentiel absolu (REFABS), et pour paramétrer ledit positionnement selon la première position (POS1).

18. Interface homme-machine selon l'une quelconque des revendications 15 à 17,
**caractérisée en ce que** ledit générateur de symboles (20) est configuré pour déterminer si ledit éloignement (D0) est inférieur ou égal à un seuil minimal (SMIN) et supérieur à un seuil de proximité (SPROX), et dans ce cas pour affecter automatiquement l'aire d'atterrissage (100) à ladite origine (54), pour paramétrer ledit référentiel selon un référentiel relatif (REFREL) centré sur l'aire d'atterrissage (100), pour paramétrer ledit positionnement selon la deuxième position (POS2).

19. Interface homme-machine selon l'une quelconque des revendications 14 à 18,
**caractérisée en ce que** ledit générateur de symboles (20) est configuré pour déterminer si ledit éloignement (D0) est inférieur ou égal à un seuil de proximité (SPROX), et dans ce cas pour afficher une échelle d'altitude (65) par rapport à une position moyenne (66) de l'aire d'atterrissage (100) depuis un temps prédéterminé (TPS), ledit symbole d'aéronef (51) et ledit symbole d'aire d'atterrissage (52) qui représente aussi un symbole de passage pointant ladite échelle d'altitude (65).

20. Interface homme-machine selon l'une quelconque des revendications 14 à 18,
**caractérisée en ce que** ladite image verticale comporte une échelle d'altitude ayant au moins une limite variable en fonction dudit éloignement.

21. Interface homme-machine selon l'une quelconque des revendications 1 à 20,
**caractérisée en ce que** ladite interface homme-machine (1) comporte au moins un senseur parmi les senseurs suivants : un senseur (71) de positionnement de l'aéronef dans un référentiel absolu, un senseur (72) de positionnement de l'aire d'atterrissage dans un repère absolu, un senseur (73) d'altitude de l'aéronef, un senseur (74) d'altitude de l'aire d'atterrissage, un senseur (75) de positionnement relatif de l'aéronef et de l'aire d'atterrissage.

22. Interface homme-machine selon l'une quelconque des revendications 1 à 21,
**caractérisée en ce que** ladite interface homme-machine (1) comporte au moins une interface de validation (81) en liaison avec un émetteur (82) et configurée pour émettre vers l'aéronef (95) un signal porteur d'une autorisation de poursuivre le vol vers ou en s'éloignant de l'aire d'atterrissage (100).
